# EUROPÄISCHE PATENTSCHRIFT

(11) **EP 2 603 681 B1**
(45) Veröffentlichungstag und Bekanntmachung des Hinweises auf die Patenterteilung: **20.05.2015**
(21) Anmeldenummer: 11741542.2
(22) Anmeldetag: 18.07.2011
(51) Int. Cl.: F01N 3/20

(54) **VORRATSTANK FÜR EIN FLÜSSIGES MEDIUM MIT EINER ANSAUGVORRICHTUNG UND EINER FILTEREINRICHTUNG**
RESERVOIR FOR A LIQUID MEDIUM HAVING A SUCTION DEVICE AND A FILTER UNIT
RÉSERVOIR POUR UN MILIEU LIQUIDE, ÉQUIPÉ D'UN DISPOSITIF D'ASPIRATION ET D'UN DISPOSITIF DE FILTRAGE

(30) Priorität: 09.08.2010 DE 102010039056
(43) Veröffentlichungstag der Anmeldung: 19.06.2013
(73) Patentinhaber: Robert Bosch GmbH, 70442 Stuttgart (DE)
(72) Erfinder: DOEHRING, Jochen, 70439 Stuttgart-Stammheim (DE); HANNEKE, Juergen, 70499 Stuttgart (DE); EMSMANN, Wulf, 71691 Freiberg Am Neckar (DE)
(86) Internationale Anmeldenummer: PCT/EP2011/062206
(87) Internationale Veröffentlichungsnummer: WO 2012/019870

(56) Entgegenhaltungen:
- DE-A1-102007 047 885

## Beschreibung

### Stand der Technik

Die Erfindung betrifft eine Ansaugvorrichtung mit einer Filtereinrichtung angeordnet in einem Vorratstank.

Zum Betreiben von Kraftfahrzeugen mit einer Abgasnachbehandlungseinrichtung mit einem Katalysator zur selektiven katalytischen Reduktion (SCR) wird aus einem Vorratstank ein flüssiges Reduktionsmittel - in der Regel eine Harnstoff-Wasser-Lösung (sog. AdBlue) - in ein Abgasrohr in Strömungsrichtung vor einem SCR-Katalysator eingedüst. Ein Beispiel einer solchen Abgasnachbehandlungseinrichtung ist aus der DE 10 2006 012 855 A1 bekannt.

Mit der Fördereinrichtung, die bspw. eine Membranpumpe umfasst, wird AdBlue aus einem Vorratstank in einem Saugschlauch gefördert. Es ist bekannt, dass die Ansaugvorrichtung eine Filtereinheit mit oder ohne Filtervlies aufweist, um Schmutzpartikel aus der Flüssigkeit abzuscheiden. Die Schmutzpartikel werden im Filter oder im Filtervlies festgehalten, die dadurch verstopfen können. In Folge dessen kann es zu einer Fehlfunktion oder sogar einem Ausfall des SCR-Systems kommen.

Die DE 10 2007 047 885 A1 beschreibt eine Reduktionsmittelförderpumpe, welche Reduktionsmittel über einen Schmutzfänger ansaugen kann.

### Offenbarung der Erfindung

Die vorliegende Erfindung unterscheidet sich von dem eingangs genannten Stand der Technik darin, dass der Vorratstank Mittel zur gezielten Sedimentation von Partikeln und Fasern aus der Flüssigkeit aufweist. Der Erfindung liegt die Idee zugrunde, der Filtereinrichtung Mittel zur Sedimentation von Partikeln und Fasern vorzuschalten an denen in der Strömung enthaltene Partikel sedimentieren und am Tankboden liegen bleiben. Dadurch gelangen diese Partikel nicht zum Filtereinheit oder Filtervlies und können diese auch nicht verstopfen. In Folge dessen wird die Lebensdauer der Filtereinheit oder des Filtervlieses deutlich verlängert.

Besonders vorteilhaft ist es, wenn am gesamten Umfang der Filtereinrichtung mindestens eine Reihe, senkrecht nach unten weisender, dünner Zinken angeordnet sind, die zwangsweise von dem Reduktionsmittel durchströmt werden, bevor sie die Filtereinheit erreichen. Aufgrund des großen Strömungsquerschnitts wird die Strömung vor den Zinken verlangsamt, so dass im Reduktionsmittel enthaltene Partikel sedimentieren können. Im weiteren Verlauf wird währen des Umströmens der dünnen Zinken die Strömung wieder beschleunigt, so das weitere Partikel infolge ihrer Trägheit abgeschieden werden. Dadurch bleibt ein Teil der Partikel schon am Tankboden liegen, bevor sie zu der Filtereinrichtung gelangen können. So wird der Aufbau eines Filterkuchens und damit ein Ansteigen des Druckverlust der Filtereinrichtung verzögert.

Eine weiterer vorteilhafte Ausgestaltung sieht vor, dass die nach unten weisenden dünnen Zinken labyrinthartig gegeneinander versetzt angeordnet sind. Dadurch wird die eine mehrfache Strömungsumlenkung erzwungen. Je häufiger und je stärker die Strömungsumlenkungen erfolgen, desto mehr und desto kleinere Partikel werden abgeschiedenen. Es wird also der der Abscheidegrad der erfindungsgemäßen Vorrichtung positiv beeinflusst.

Vorteilhaft ist auch, wenn der Tankboden unterhalb der Ansaugvorrichtung eine Vertiefung aufweist. An dieser Stelle verringert sich die Strömungsgeschwindigkeit nochmals und es setzen sich weitere Partikel in der Vertiefung am Tankboden ab. Die in der Vertiefung abgelagerten Partikel gelangen nicht zu der Filtereinrichtung, so dass der Druckverlust in der Filtereinheit über die gesamte Lebensdauer nicht nennenswert ansteigt.

Bei einer besonders bevorzugten Weiterbildung weist der Tankboden unterhalb der Ansaugvorrichtung eine Vielzahl hakenförmiger Ausbildungen auf. Dadurch wird dem Umstand Rechnung getragen, dass sich faserförmige Partikel lassen aufgrund ihrer besonderen Form und weil ihr spezifisches Gewicht in der Regel dem des Reduktionsmittels annähernd gleicht mittels der oben beschriebenen Verzögerungen und Umlenkungen nur bedingt aussedimentieren. An den erfindungsgenmäßen hakenförmigen Ausbildungen bleiben die Fasern jedoch hängen und gehen mit diesen eine formschlüssige Verbindung, ähnlich einem Klettverschluss, ein. Durch diese Weiterbildung der Erfindung wird es möglich vor allem faserförmige Partikel sehr wirksam abzuscheiden.

Eine vorteilhafte Ausgestaltung sieht vor, dass die hakenförmigen Ausbildungen an einem Trägermaterial angeordnet sind, und dass das Trägermaterial am Tankboden angeordnet ist. Als Trägermaterial mit hakenförmigen Ausbildungen kann zum Beispiel ein Teil eines Klettverschlusses verwendet werden. Alternativ dazu kann auch der Tankboden des Vorratstanks so gestaltet werden, dass eine erfindungsgemäße Struktur entsteht.

Weitere Vorteile ergeben sich aus der nachfolgenden Beschreibung und den beigefügten Figuren. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Figuren dargestellt und werden in der nachfolgenden Beschreibung näher erläutert. Es zeigen, jeweils in schematischer Form:
- Figur 1: schematische Darstellung einer Abgasnachbehandlungseinrichtung;
- Figur 2: eine erfindungsgemäße Ansaugvorrichtung;
- Figur 3: Funktionsweise der Oberflächenstruktur der Erfindung

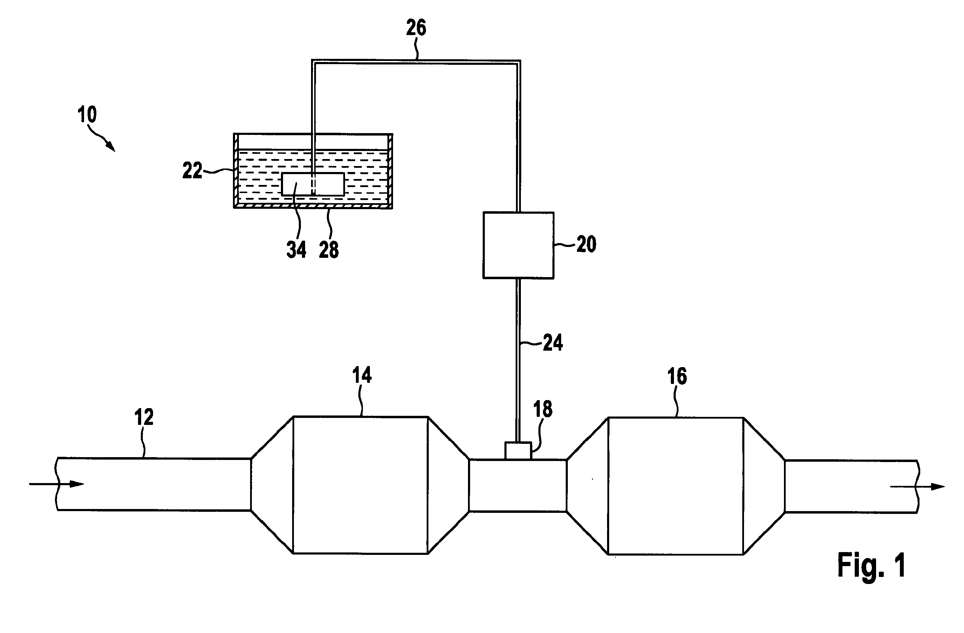

In Figur 1 ist eine Abgasnachbehandlungseinrichtung 10 einer Brennkraftmaschine stark vereinfacht und schematisch dargestellt und zeigt das Umfeld der Erfindung. Die Abgasnachbehandlungseinrichtung 10 umfasst ein Abgasrohr 12, einen Oxidationskatalysator 14 und einen SCR-Katalysator 16. Nicht dargestellt ist ein Partikelfilter, der üblicherweise stromabwärts des Oxidationskatalysators 14 angeordnet wird. Die Strömungsrichtung des Abgases durch das Abgasrohr 12 ist durch Pfeile (ohne Bezugszeichen) angedeutet.

Um den SCR-Katalysator 16 mit einem flüssigen Reduktionsmittel, z.B. einer Harnstoff-Wasser-Lösung (sog. AdBlue) oder einem anderen flüssigen Reduktionsmittel zu versorgen, ist stromaufwärts des SCR-Katalysators 16 am Abgasrohr 12 eine Dosiereinrichtung 18 für die Harnstoff-Wasser-Lösung angeordnet. Die Dosiereinrichtung 18 spritzt bei Bedarf die Harnstoff-Wasser-Lösung stromaufwärts des SCR-Katalysators 16 in das Abgasrohr 12 ein.

Das gesamte Dosiersystem umfasst neben der Dosiereinrichtung 18 eine Dosierpumpe 20, sowie einen Vorratstank 22 für die Harnstoff-Wasser-Lösung. Zwischen der Dosierpumpe 20 und der Dosiereinrichtung 18 ist eine erste Leitung (Reduktionsmittelzuführleitung) 24 vorgesehen. Zwischen dem Vorratstank 19 und der Dosierpumpe 18 ist eine zweite Leitung als Saugleitung 26 für die Harnstoff-Wasser-Lösung vorgesehen. Sie kann am Vorratstank 22 oben oder unten, im Prinzip an jeder beliebigen Position, angeschlossen sein, wird aber bevorzugt durch einen Deckel des Vorratstanks 22 bis zum Tankboden 28 geführt.

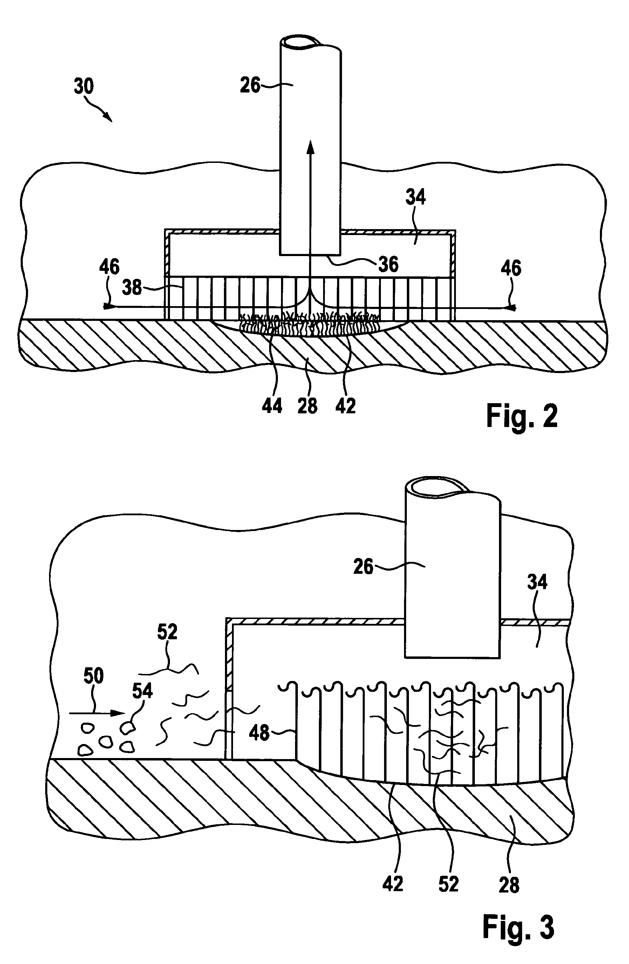

Figur 2 zeigt eine erfindungsgemäße Ansaugeinrichtung 30 der Saugleitung 26. Der Saugleitung 26 vorgeschaltet ist eine Filtereinrichtung 34 welche eine Ansaugöffnung 36 der Saugleitung 26 bedeckt.

Am gesamten Umfang der Filtereinrichtung 34 sind dünne Zinken 38 in der Art eines Kammes angeordnet, die senkrecht nach unten bis zum Tankboden 28 reichen. In den Tankboden 28, unterhalb der Ansaugöffnung 36, ist lokal eine Vertiefung 42 eingebracht. In der Vertiefung 42 ist die Oberfläche des Tankbodens 28 aufgeraut oder es ist ein Trägermaterial 44 eingelegt, an dessen Oberseite hakenförmige Strukturen (ohne Bezugszeichen) ausgebildet ist. Das Trägermaterial 44 kann ein Hakenband sein, wie es beispielsweise von Klettverschlüssen bekannt ist.

Ein Stromfaden 46 beschreibt den Weg der angesaugten Flüssigkeit aus dem Vorratstank 22 in die Saugleitung 26.

Von der Flüssigkeit transportierte Partikel oder Fasern werden zunächst an den dünnen Zinken 38 abgeschieden. Die Größenverteilung der abgeschiedenen Partikel hängt insbesondere von der Form der Zinken 38 und von der Anordnung der Zinken 38 zueinander ab. Denkbar ist beispielsweise eine ein- oder mehrreihige oder labyrinthartige Anordnung der Zinken 38. Im weiteren Verlauf passiert die Strömung die Vertiefung 42 im Tankboden 28. An dieser Stelle verringert sich die Strömungsgeschwindigkeit und weitere Partikel sedimentieren. Form und Größe der Vertiefung 42 beeinflussen die Größenverteilung der sedimentierten Partikel. Die von groben Partikeln gereinigte Flüssigkeit strömt weiter, durch die Filtereinrichtung 34 in die Saugleitung 26. Bereits abgeschiedene Partikel gelangen nicht zur Filtereinrichtung 34, und können diese auch nicht verstopfen. Die Funktion der Oberflächenstruktur in der Vertiefung 42 wird nachfolgend, anhand von Fig. 3, näher beschrieben.

Fig. 3 zeigt schematisch eine Oberflächenstruktur und deren Wirkungsweise. Dargestellt ist der Tankboden 28 in der Vertiefung 42. An dem Tankboden 28 sind im Bereich der Vertiefung 42 eine Vielzahl hakenförmiger Ausbildungen 48, die im Zusammenhang mit der Erfindung auch als Haken bezeichnet werden, ausgebildet. Dies kann durch geeignete Bearbeitung des Tankbodens 28 erfolgen. Alternativ kann auch ein Trägermaterial 44 mit entsprechender Oberflächenstruktur in die Vertiefung 42, wie in Fig. 2 dargestellt, eingelegt werden.

In der Flüssigkeitsströmung (symbolisiert durch Pfeil 50) mitgeführte faserförmige Partikel 52 sedimentieren in der Vertiefung 42 und bilden mit den hakenförmigen Ausbildungen 48 eine formschlüssige Verbindung. Mit steigender Anzahl an faserförmigen Partikeln 52 werden die freien Querschnitte in der Verbindung kleiner und ab einer ausreichenden Menge an sedimentierten faserförmigen Partikeln 52 sind die Querschnitte klein genug um auch kornförmige Partikel 54 zurückzuhalten. Es entsteht eine Art Vorfilter, dessen Speicherkapazität größer ist, als die der eigentlichen Filtereinheit 34. Denkbar ist es deshalb auch, die faserförmigen Partikel 52 gezielt in die Flüssigkeit einzubringen.

## Patentansprüche

1. Vorratstank (22) für ein flüssiges Medium zur Abgasnachbehandlung mit einer Ansaugvorrichtung (30) und mit einer Filtereinrichtung (34), **dadurch gekennzeichnet, dass** der Filtereinrichtung (34) Mittel zur Sedimentation von Partikeln (54) und Fasern (52) vorgeschaltet sind, und dass das flüssige Medium zwangsweise durch die Mittel zur Sedimentation von Partikeln (54) und Fasern (52) strömt bevor es in die Filtereinrichtung (34) gelangt.

2. Vorratstank (22) nach Anspruch 1, **dadurch gekennzeichnet, dass** die Mittel zur Sedimentation von Partikeln (54) und Fasern (52) mindestens eine Reihe dünner Zinken (38) umfassen, und dass die mindestens eine Reihe dünner Zinken (38) an dem gesamten Umfang der Filtereinrichtung (34) angeordnet sind.

3. Vorratstank (22) nach Anspruch 1 oder 2, **dadurch gekennzeichnet, dass** die dünnen Zinken (38) in Einbaulage des Vorratstanks (22) im Wesentlichen vertikal nach unten weisen.

4. Vorratstank (22) nach Anspruch 2 Oder 3, **dadurch gekennzeichnet, dass** die Zinken (38) labyrinthartig gegeneinander versetzt angeordnet sind

5. Vorratstank (22) nach einem der vorangehenden Ansprüche **dadurch gekennzeichnet, dass** ein Tankboden (28) des Vorratstanks (22) in Einbaulage unterhalb der Ansaugvorrichtung (30) und/oder der Filtereinrichtung (34) eine Vertiefung (42) aufweist.

6. Vorratstank (22) nach einem der vorangehenden Ansprüche, **dadurch gekennzeichnet, dass** die Mittel zur Sedimentation von Partikeln (54) und Fasern (52) eine Vielzahl von Haken (48) umfassen, und das die Haken (48) in Einbaulage unterhalb der Ansaugvorrichtung (30) und/oder der Filtereinrichtung (34) angeordnet ist.

7. Vorratstank (22) nach Anspruch 6, **dadurch gekennzeichnet, dass** die Haken (48) an einem Trägermaterial (44) befestigt sind, und dass das Trägermaterial (44) auf dem Tankboden (28) in Einbaulage unterhalb der unterhalb der Ansaugvorrichtung (30) und/oder der Filtereinrichtung (34) angeordnet ist.

8. Vorratstank (22) nach einem der vorangehenden Ansprüche, **dadurch gekennzeichnet, dass** der Vorratstank (22) Teil einer Abgasnachbehandlungseinrichtung ist.

## Claims

1. Storage tank (22) for a liquid medium for exhaust-gas aftertreatment, having a suction apparatus (30) and having a filter device (34), **characterized in that** means for the sedimentation of particles (54) and fibres (52) are positioned upstream of the filter device (34), and **in that** the liquid medium compulsorily flows through the means for the sedimentation of particles (54) and fibres (52) before said liquid medium passes into the filter device (34).

2. Storage tank (22) according to Claim 1, **characterized in that** the means for the sedimentation of particles (54) and fibres (52) comprise at least one row of thin prongs (38), and **in that** the at least one row of thin prongs (38) is arranged around the entire circumference of the filter device (34).

3. Storage tank (22) according to Claim 1 or 2, **characterized in that** the thin prongs (38) point substantially vertically downward in the installed position of the storage tank (22).

4. Storage tank (22) according to Claim 2 or 3, **characterized in that** the prongs (38) are arranged offset relative to one another in the manner of a labyrinth.

5. Storage tank (22) according to one of the preceding claims, **characterized in that** a tank base (28) of the storage tank (22) has a depression (42) which is situated below the suction apparatus (30) and/or the filter device (34) in the installed position.

6. Storage tank (22) according to one of the preceding claims, **characterized in that** the means for the sedimentation of particles (54) and fibres (52) comprise a multiplicity of hooks (48), and **in that** the hooks (48) are arranged below the suction apparatus (30) and/or the filter device (34) in the installed position.

7. Storage tank (22) according to Claim 6, **characterized in that** the hooks (48) are fastened to a carrier material (44), and **in that** the carrier material (44) is arranged on the tank base (28) below the suction apparatus (30) and/or the filter device (34) in the installed position.

8. Storage tank (22) according to one of the preceding claims, **characterized in that** the storage tank (22) is part of an exhaust-gas aftertreatment device.

## Revendications

1. Réservoir (22) pour un milieu fluide pour le post-traitement de gaz d'échappement, comprenant un dispositif d'aspiration (30) et un dispositif de filtre (34), **caractérisé en ce qu'**en amont du dispositif de filtre (34) sont montés des moyens de sédimentation de particules (54) et de fibres (52), et **en ce que** le milieu fluide s'écoule obligatoirement à travers les moyens de sédimentation de particules (54) et de fibres (52) avant de parvenir dans le dispositif de filtre (34).

2. Réservoir (22) selon la revendication 1, **caractérisé en ce que** les moyens de sédimentation de particules (54) et de fibres (52) comprennent au moins une rangée de dents minces (38) et **en ce que** l'au moins une rangée de dents minces (38) est disposée sur l'ensemble de la périphérie du dispositif de filtre (34).

3. Réservoir (22) selon la revendication 1 ou 2, **caractérisé en ce que** les dents minces (38), dans la position d'installation du réservoir (22), sont tournées essentiellement verticalement vers le bas.

4. Réservoir (22) selon la revendication 2 ou 3, **caractérisé en ce que** les dents (38) sont disposées de manière décalée les unes par rapport aux autres en forme de labyrinthe.

5. Réservoir (22) selon l'une quelconque des revendications précédentes, **caractérisé en ce qu'**un fond de réservoir (28) du réservoir (22) présente un renfoncement (42), dans la position d'installation, en dessous du dispositif d'aspiration (30) et/ou du dispositif de filtre (34).

6. Réservoir (22) selon l'une quelconque des revendications précédentes, **caractérisé en ce que** les moyens de sédimentation de particules (54) et de fibres (52) comprennent une pluralité de crochets (48) et **en ce que** les crochets (48), dans la position d'installation, sont disposés en dessous du dispositif d'aspiration (30) et/ou du dispositif de filtre (34).

7. Réservoir (22) -selon la revendication 6, **caractérisé en ce que** les crochets (48) sont fixés sur un matériau de support (44) et **en ce que** le matériau de support (44) est disposé sur le fond du réservoir (28) dans la position d'installation en dessous du dispositif d'aspiration (30) et/ou du dispositif de filtre (34).

8. Réservoir (22) selon l'une quelconque des revendications précédentes, **caractérisé en ce que** le réservoir (22) fait partie d'un dispositif de post-traitement de gaz d'échappement.
